Europäisches Patentamt

European Patent Office

Office européen des brevets

(19)

(11) EP 1 104 183 A2

(12) **EUROPEAN PATENT APPLICATION**

(43) Date of publication:
**30.05.2001 Bulletin 2001/22**

(51) Int Cl.[7]: **H04N 5/44**

(21) Application number: **00304902.0**

(22) Date of filing: **09.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **24.11.1999 JP 33237399**

(71) Applicant: **Hitachi, Ltd.**
**Chiyoda-ku, Tokyo 101-8010 (JP)**

(72) Inventors:
• **Igarashi, Yutaka, c/o Hitachi, Ltd., Int.Property**
**Chiyoda-ku, Tokyo 100-8220 (JP)**

• **Mizukami, Hiroyuki c/o Hitachi, Ltd., Int.Property**
**Chiyoda-ku, Tokyo 100-8220 (JP)**
• **Tamizu, Kazuhidekic/o Hitachi, Ltd., Int.Property**
**Chiyoda-ku, Tokyo 100-8220 (JP)**

(74) Representative: **Calderbank, Thomas Roger et al**
**MEWBURN ELLIS**
**York House**
**23 Kingsway**
**London WC2B 6HP (GB)**

(54) **Receiving device, and television receiver and recording and reproducing apparatus which use the device.**

(57)    A receiving device of a double superheterodyne circuit structure comprising a first and a second IF filter (50,90), a first and a second IF amplifier (60,100), a detection circuit (410), and a first and a second mixer (40,70). The receiving device is designed to control automatically its power dissipation by processing only a desired signal extracted from a composite signal having at least two signals of different levels frequency-division multiplexed therein. The detection circuit (410) detects an output of the second IF amplifier upstream of the second IF filter and controls automatically a bias current of the first IF amplifier, second mixer, and second IF amplifier in keeping with a magnitude of the detected interference. Upon increase of a level of an interfering signal with its channel next to or next but one to that of the desired signal, the detection circuit boosts the bias current. When the interfering signal level drops, the detection circuit reduces the bias current for power dissipation control.

FIG. 2

EP 1 104 183 A2

## Description

The present invention relates to a receiving device for receiving signals having a plurality of channels and for automatically controlling the amount of power it dissipates, and to a television receiver and a recording and reproducing apparatus which use the receiving device.

For radio and television broadcasting, a plurality of signals are broadcast on a frequency-divisionmultiplexed basis. Desired signals are extracted from the multiple signals by tuners. One preferred type of tuner is what is known as a double superheterodyne receiver. The double superheterodyne receiver has an excellent in- band flatness (tilt) characteristic for multi-channel reception and is highly immune to reception interference attributable to image disruption or to leaks of locally oscillated signals.

Major disadvantages of the related art of this invention are outlined below, with a typical double superheterodyne receiver for telecast reception taken as an example.

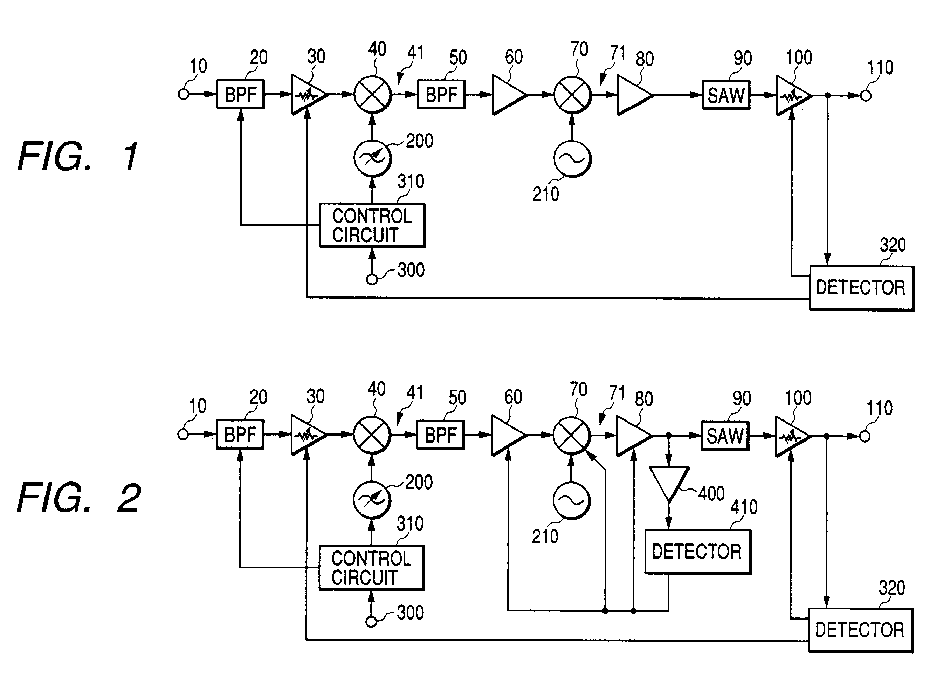

Fig. 1 shows how a double superheterodyne television receiver is illustratively structured. As depicted in Fig. 1, a signal input through a television signal input terminal 10 is processed by an input filter 20, a variable gain amplifier 30, a first mixer 40, a first IF (intermediate frequency) filter 50, a first IF amplifier 60, a second mixer 70, a second IF amplifier 80, a second IF filter 90, and a second IF variable gain amplifier 100, in that order, before being output from an output terminal 110. The first mixer 40 is connected with a first local oscillator 200 and the second mixer 70 with a second local oscillator 210.

An output signal of the second IF variable gain amplifier 100 is split and forwarded to a detector 320. An output of the detector 320 is input to the variable gain amplifier 30 and to the second IF variable gain amplifier 100. An input signal coming through a tuning signal input terminal 300 is input to a control circuit 310. An output of the control circuit 310 is sent to the first local oscillator 200 and input filter 20.

What follows is a description of how the typical double superheterodyne television receiver of Fig. 1 works. An RF (radio frequency) signal derived from standard TV signals through amplitude modulation (AM) is input through the input terminal 10 and split by the input filter 20 into different bands. Only the band that contains the desired channel is allowed to pass through the filter 20 and input to the variable gain amplifier 30. When the RF signal is amplified by the variable gain amplifier 30 having a small noise figure, the noise figure characteristic of the television receiver as a whole is improved. The tuning signal input terminal 300 admits a tuning signal.

The input filter 20 is variably controlled by the control circuit 310 so as to select a pass band corresponding to the desired channel. The variable gain amplifier 30 amplifies or attenuates the signal whose band has been limited by the input filter 20, before forwarding the signal to the first mixer 40.

Under control of the control circuit 310, the first local oscillator 200 oscillates at a frequency corresponding to the desired channel in accordance with the tuning signal coming through the tuning signal input terminal 300. The first local oscillator 200 is constituted illustratively by a PLL synthesizer circuit that oscillates at the frequency relevant to the selected channel.

The first mixer 40 mixes the signal from the variable gain amplifier 30 with a locally oscillated signal from the first local oscillator 200 for frequency conversion, outputting a first IF (intermediate frequency) signal 41. The first IF filter 50 allows only the desired channel of the first IF signal 41 to pass through selectively. The first IF amplifier 60 amplifies the signal from the first IF filter 50 and inputs the amplified signal to the second mixer 70. The second mixer 70 mixes the signal from the first IF amplifier 60 with a locally oscillated signal from the second local oscillator 210 for frequency conversion, outputting a second IF signal 71. The second IF amplifier 80 amplifies the second IF signal 71 and inputs the amplified signal to the second IF filter 90 made illustratively of a SAW (surface acoustic wave) filter. The second IF filter 90 allows only the desired channel of the second IF signal 71 to pass through selectively. Past the second IF filter 90, the second IF signal 71 is amplified by the second IF variable gain amplifier 100 before the amplified signal is output via the output terminal 110.

A gain control signal for controlling the variable gain amplifier 30 and second IF variable gain amplifier 100 in gain is generated by the detector 320 splitting and detecting the output signal of the second variable gain amplifier 100. The detector 320 feeds the gain control signal either to the variable gain amplifier 30 or to the second IF variable gain amplifier 100.

More specifically, the detector 320 first detects the output signal of the second IF variable gain amplifier 100. If the level of the detected signal is determined too high, the detector 320 supplies the gain control signal to the second IF variable gain amplifier 100 to reduce its gain. If the signal level still remains too high despite the gain of the second IF variable gain amplifier 100 being minimized, then the detector 320 feeds the gain control signal to the variable gain amplifier 30 to lower its gain. Whether or not the gain of the second IF variable gain amplifier 100 is at a minimum is determined by the detector 320 through comparison with a reference voltage serving as a detection level.

If the level of the output signal from the second IF variable gain amplifier 100 is determined too low, the detector 320 applies the gain control signal to the variable gain amplifier 30 to boost its gain. If the signal level remains too low despite the gain of the variable gain amplifier 30 being maximized, then the detector 320 feeds the gain control signal to the second IF variable gain amplifier 100 to increase its gain. Whether or not the gain of the variable gain amplifier 30 is at a maximum is determined by the detector 320 through comparison with a reference voltage serving as a detection level.

As described, where it is necessary to reduce the gain of the variable gain amplifier 30 or 100 to keep constant the level of the signal output via the output terminal 110, the gain of the second IF variable gain amplifier 100 located downstream in the receiver is first reduced as much as possible. If such gain reduction turns out to be insufficient, the gain of the upstream variable gain amplifier 30 is lowered. This arrangement is intended to make sure that the gain of the upstream variable gain amplifier 30 is kept maximized as long as possible, which inhibits deterioration of the noise figure specific to the receiver as a whole.

To maintain a good (i.e., low) noise figure (NF) generally requires keeping the gain of the upstream amplifier higher than that of the downstream amplifier. It follows that for gain reduction in amplifiers, the gain of the downstream amplifier is first reduced as much as possible before the gain of the upstream amplifier is additionally lowered as needed to keep the output signal level constant. For gain increase in the amplifiers, the gain of the upstream amplifier is first boosted as much as possible before the gain of the downstream amplifier is additionally enhanced to make up for any gain deficit.

The gain control signal for the variable gain amplifier 30 is set to a relatively long time constant while the gain control signal for the second IF variable gain amplifier 100 is set to a relatively short time constant. Given such settings, the second IF variable gain amplifier 100 is operated to keep up with signal level changes in short cycles such as those of the flutter caused illustratively by an aircraft flyover.

The typical receiving device outlined above is designed to avert signal distortion inside because the device receives an RF signal having a plurality of contiguous frequency bands (channels) multiplexed thereon. Generally, the receiving device has a large DC bias current flowing therethrough (to operate various circuits inside). However, signals may not be present on contiguous channels depending on the channel assignments in the RF signal. If a video deck or a set-top box for CATV use is connected to the TV set on an RF signal basis, there exists no preferred channel to be selected in the first place. In such a case, the receiving device may have a desired signal extracted adequately by use of a small DC bias current. In other words, the receiving device usually dissipates more power than it actually needs.

The present invention has been made in view of the above circumstances and provides a television receiver and a recording and reproducing apparatus which use a receiving device for automatically controlling a DC bias current (power dissipation of the device) in accordance with the channel assignments in a composite signal made of at least two frequency-division multiplexed signals at different levels, one of the signals being extracted as the desired signal to be processed.

In carrying out the invention and according to one aspect thereof, there is provided an automated power dissipation control circuit including: an input terminal through which to input a signal to be received; a first variable gain amplifier which either amplifies or attenuates to a predetermined level the signal input through the input terminal; a filter whichlets pass a signal of a predetermined band selected from the signal output by the first variable gain amplifier; a second variable gain amplifier which either amplifies or attenuates to a predetermined level the signal having passed through the filter; and a control element which establishes gain settings in the first variable gain amplifier and the second variable gain amplifier. If a level of the signal input to the filter is determined below a predetermined level, the control element reduces power dissipation of the first variable gain amplifier in keeping with the output of the second variable control amplifier. If the level of the signal input to the filter is determined in excess of the predetermined level, the control element increases power dissipation of the first variable gain amplifier in accordance with the output of the second variable gain amplifier.

Using the control circuit outlined above, the invention provides a receiving device for receiving a reception signal having a plurality of channels and for controlling automatically its power dissipation, as well as a television receiver and a recording and reproducing apparatus which utilize the receiving device.

In particular, the invention offers a method and an apparatus for automated power dissipation control whereby only a desired signal is processed following extraction from a composite signal having at least two signals of different levels frequency-division multiplexed therein.

The above and other features, objects and advantages of the present invention will become more apparent from the following description when taken in conjunction with the accompanying drawings wherein:

Fig. 1 is a block diagram of a receiving device of a related art;
Fig. 2 is a block diagram of a receiving device embodying the invention;
Fig. 3 is a circuit diagram showing a detailed structure of a power dissipation control unit included in the setup of Fig. 1;
Fig. 4 is a circuit diagram of a typical bias current variable amplifier to which the power dissipation control unit of Fig. 3 is applied;
Fig. 5 is a block diagram of a setup connecting a television receiver with a video deck each incorporating the receiving device of Fig. 2;

Fig. 6 is a schematic view depicting signal assignments of a frequency division multiplex scheme together with characteristics of a first IF filter; and

Fig. 7 is a graphic representation of secondary and tertiary intermodulation noise characteristics as well as NF characteristics versus collector currents in a transistor.

A preferred embodiment of this invention will now be described. Fig. 2 is a block diagram of a television signal receiving device embodying the invention. As illustrated, a signal input through a television signal input terminal 10 is processed by an input filter 20, a variable gain amplifier 30, a first mixer 40, a first IF (intermediate frequency) filter 50, a first IF amplifier 60, a second mixer 70, a second IF amplifier 80, a second IF filter 90, and a second IF variable gain amplifier 100, in that order, before being output from an output terminal 110. The first mixer 40 is connected with a first local oscillator 200 and the second mixer 70 with a second local oscillator 210.

An output signal of the second IF variable gain amplifier 100 is split and forwarded to a detector 320. An output of the detector 320 is input to the variable gain amplifier 30 and to the second IF variable gain amplifier 100. An input signal coming through a tuning signal input terminal 300 is input to a control circuit 310. An output of the control circuit 310 is sent to the first local oscillator 200 and input filter 20.

An output signal of the second IF amplifier 80 is split and sent to an amplifier 400. Past the amplifier 400 and through a detector 410, the signal is fed back to the first IF amplifier 60, second mixer 70 and second IF amplifier 80.

As depicted in Fig. 2, an RF signal modulated in the television signal propagates from an antenna through the input terminal 10 to the input filter 20. The input filter 20 divides the signal into VHF and UHF bands (and sometimes divides the VHF band further into low, medium and high frequency bands), so that only a band containing a desired channel is selectively input to the variable gain amplifier 30. When the variable gain amplifier 30 having a small noise figure amplifies the RF signal, the NF characteristic of the television receiver as a whole is improved. The tuning signal input terminal 300 admits a tuning signal.

Under variable control of the control circuit 310, the input filter 20 selects a suitable pass band in accordance with the desired channel. The variable gain amplifier 30 amplifies or attenuates to a suitable reception level the signal whose band has been limited by the input filter. From the variable gain amplifier 30, the signal is forwarded to the first mixer 40.

Under control of the control circuit 310, the input filter 20 selects a suitable pass band based on the tuning signal input through the tuning signal input terminal 300. The input filter 20 reduces the number of channels to be input to the variable gain amplifier 30, thus shielding downstream circuits appreciably against intermodulation noise between the input signals. However, the input filter 20 cannot extract only the necessary channel, letting enter signals of adjacent channels.

The variable gain amplifier 30 amplifies to a suitable reception level the signal whose band has been limited by the input filter 20, and forwards the amplified signal to the first mixer 40. The amount of gain attenuation by the variable gain amplifier 30 is set by an automatic gain control signal fed from the detector 320. The amount of gain attenuation thus established will be described later in more detail.

In accordance with the tuning signal input through the tuning signal input terminal 300, the first local oscillator 200 oscillates at a frequency corresponding to the desired channel under control of the control circuit 310. The first local oscillator 200 is constituted illustratively by a PLL synthesizer circuit that oscillates at the frequency relevant to the desired channel.

The first mixer 40 mixes the signal from the variable gain amplifier 30 with a locally oscillated signal from the first local oscillator 200 for frequency conversion, outputting a first IF (intermediate frequency) signal 41.

The first local oscillator 200 is set to oscillate so that the frequency of the first IF signal 41 will be in excess of maximum frequencies of terrestrial transmission bands for NTSC television signals or of CATV transmission bands. Illustratively, the signal frequency may be set to the 960 MHz band, 1200 MHz band, 1700 MHz, 2600 MHz, and 3000 MHz band for transmissions in Japan, the United States and Europe.

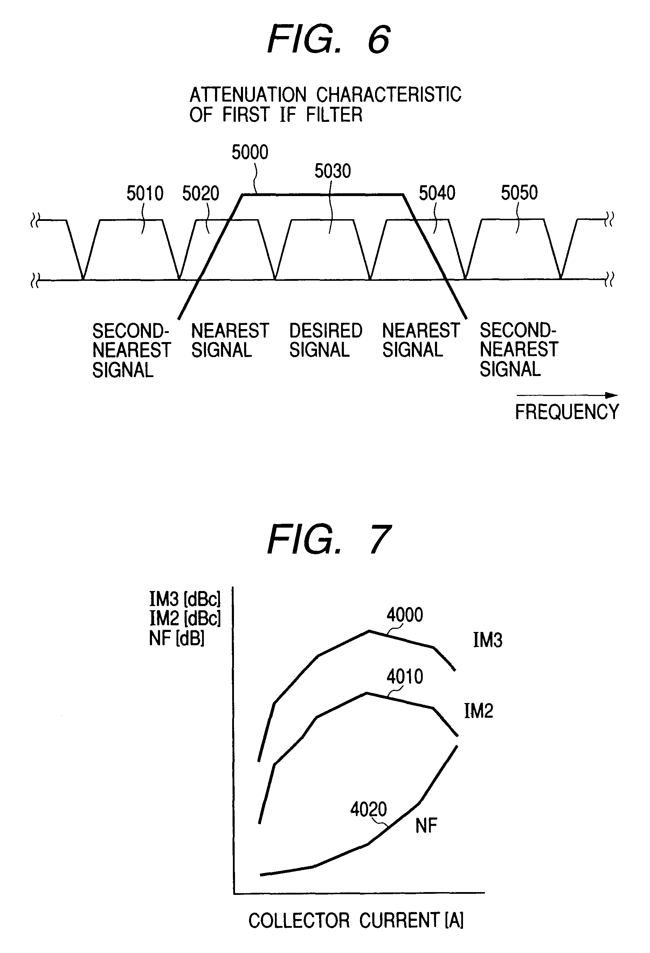

The first IF filter 50 allows only the band containing the desired channel of the first IF signal 41 to pass selectively for input to the first IF amplifier 60. The first IF filter 50 is a band-pass filter (dielectric filter or SAW filter) that has an in-band flat characteristic and a low-group delay deviation characteristic such as not to deteriorate demodulation of a high-definition television signal. Because the signal that is input to the first IF filter 50 has a very high frequency, it is difficult for the filter to let pass only the desired channel; the filter 50 also allows signals on adjacent channels to pass through. What takes place at this point is described below with reference to Fig. 6.

In Fig. 6, the axis of ordinate represents signal levels and the axis of abscissa denotes frequencies. A desired signal 5030 is flanked by the nearest signals 5020 and 5040 on the lower and the upper frequency side respectively. The second-nearest signals 5010 and 5050 are assigned on the lower and the upper frequency side of the nearest signals 5020 and 5040 respectively. More signals are assigned below and above the second-nearest signals 5010 and 5050 in terms of frequencies. Such signal assignments are part of frequency division multiplexing.

An attenuation characteristic of the first IF filter 50 included in Fig. 2 is identified by reference numeral 5000 in Fig. 6. As indicated, the nearest signals 5020 and 5040 cannot be attenuated selectively by the first IF filter 50 in Fig. 2. Likewise, it is impossible for the first IF filter 50 in Fig. 2 to attenuate selectively the second-nearest signals 5010 and 5050 as well as any signals whose frequencies are below or above the signal 5010 or 5050 respectively provided the signals have sufficiently high frequencies.

Returning now to Fig. 2, the first IF amplifier 60 admits a signal having the desired as well as the nearest and second-nearest signals multiplexed therein. After amplification by the first IF amplifier 60, the signal is sent to the second mixer 70.

The second mixer 70 mixes the signal from the first IF amplifier 60 with the locally oscillated signal from the second local oscillator 210. The result is a second IF signal 71 that is output.

The second local oscillator 210 is set to oscillate so that the frequency of the second IF signal 71 will become equal to what is in effect upon receipt of the current standard television signal. More specifically, the signal frequency should be on the 44 MHz band in the United States, i.e., the same as upon reception of the current standard television signal, on the 57 MHz band in Japan, and on the 36 MHz band in Europe.

The second IF signal 71 is amplified by the second IF amplifier 80. Because the second IF signal 71 has a low frequency, the second IF filter 90 allows only the desired channel to pass selectively. This is the component whereby the signals on adjacent channels are finally removed. The second IF filter 90 is constituted illustratively by a SAW filter which, while allowing the desired channel alone to pass, needs an in-band flat characteristic and a low-group delay deviation characteristic such as not to deteriorate demodulation characteristics of the television signal.

The signal is then amplified or attenuated to the necessary signal level by the second IF variable gain amplifier 100. The signal from the second IF variable gain amplifier 100 is output through the output terminal 110. From the output terminal 110, the signal is forwarded to a synchronous detector, not shown.

A gain control signal for controlling the variable gain amplifier 30 and second IF variable gain amplifier 100 in gain is generated by the detector 320 splitting and detecting the output signal of the second variable gain amplifier 100. The detector 320 feeds the gain control signal either to the variable gain amplifier 30 or to the second IF variable gain amplifier 100.

More specifically, the detector 320 first detects the output signal of the second IF variable gain amplifier 100. If the level of the detected signal is determined too high, the detector 320 supplies the gain control signal to the second IF variable gain amplifier 100 to reduce its gain. If the signal level still remains too high despite the gain of the second IF variable gain amplifier 100 being minimized, then the detector 320 feeds the gain control signal to the variable gain amplifier 30 to lower its gain. Whether or not the gain of the second IF variable gain amplifier 100 is at a minimum is determined by the detector 320 through comparison with a reference voltage serving as a detection level.

If the level of the output signal from the second IF variable gain amplifier 100 is determined too low, the detector 320 applies the gain control signal to the variable gain amplifier 30 to boost its gain. If the signal level remains too low despite the gain of the variable gain amplifier 30 being maximized, then the detector 320 feeds the gain control signal to the second IF variable gain amplifier 100 to increase its gain. Whether or not the gain of the variable gain amplifier 30 is at a maximum is determined by the detector 320 through comparison with a reference voltage serving as a detection level.

As described, where it is necessary to reduce the gain of the variable gain amplifier 30 or 100 to keep constant the level of the signal output via the output terminal 110, the gain of the second IF variable gain amplifier 100 located downstream in the receiving device is first reduced as much as possible. If such gain reduction turns out to be insufficient, the gain of the upstream variable gain amplifier 30 is lowered. This arrangement ensures that the gain of the upstream variable gain amplifier 30 is kept maximized as long as possible, which inhibits deterioration of the noise figure specific to the receiving device as a whole.

To preserve a good (i.e., low) noise figure (NF) generally requires keeping the gain of the upstream amplifier higher than that of the downstream amplifier. It follows that for gain reduction in amplifiers, the gain of the downstream amplifier is first reduced as much as possible before the gain of the upstream amplifier is additionally lowered as needed. For gain increase in the amplifiers, the gain of the upstream amplifier is first boosted as much as possible before the gain of the downstream amplifier is additionally enhanced to make up for any gain deficit.

The gain control signal for the variable gain amplifier 30 is set to a relatively long time constant while the gain control signal for the second IF variable gain amplifier 100 is set to a relatively short time constant. Given such settings, the second IF variable gain amplifier 100 is operated to keep up with signal level changes in short cycles such as those of the flutter caused illustratively by an aircraft flyover.

If the desired signal has adjacent signals assigned on the nearest and the second-nearest channels, these adjacent signals cannot be removed by the filters 20 and 50, as described above. For that reason, the variable gain amplifier 30, first mixer 40, first IF amplifier 60, second mixer 70, and second IF amplifier 80 allow a sufficient DC bias current to flow therethrough to ensure desired linear operations even if the desired signal has other signals assigned on the nearest and the second-nearest channels.

Where the second IF filter 90 is constituted by a SAW filter as mentioned above, a large loss caused by the SAW filter is compensated by an appreciably high level of the desired signal set by the second mixer 70 and second IF amplifier 80. This necessarily entails a large DC bias current to guarantee linear operations.

However, if the television set is connected illustratively with a video deck or a set-top box for CATV use on an RF signal basis or if there is only a limited range of broadcast waves, the desired signal may have no adjacent signals assigned on the nearest and the second-nearest channels. In such cases, smaller DC bias currents are sufficient to extract the desired signal adequately.

Fig. 7 gives a typical graphic representation of distortion and NF characteristics versus collector currents in a transistor amplifier. The axis of abscissa denotes collector currents in a transistor used by the amplifier. The axis of ordinate represents tertiary intermodulation noise (abbreviated to IM3 hereunder), secondary intermodulation noise (IM2), and NF characteristics in effect upon input of sine wave signals having two different frequencies f1 and f2. The IM3, IM2 and NF characteristic curves are identified by reference numerals 4000, 4010 and 4020 respectively.

If the desired signal has the frequency f1, then the IM3 is given as a difference in amplitude spectrum level between the frequency f1 on the one hand and frequencies |2f1 - f2|, |2f2 - f1| on the other hand; and the IM2 is defined as a difference in amplitude spectrum level between the frequency f1 on the one hand the frequencies |f1 - f2|, |f1 + f2| on the other hand. The largest possible IM2 and IM3 characteristics are preferred in order to ensure the smallest distortion.

As shown in Fig. 7, smaller collector currents are associated with lower NF levels but entail inferior IM2 and IM3 characteristics. When a frequency division multiplexed signal such as that in Fig. 6 is to be input to the transistor amplifier whose characteristics are shown in Fig. 7, the collector current needs to be set so as to obtain adequate IM2 and IM3 characteristics. Such settings are made at the expense of an optimum NF characteristic and involve higher power dissipation.

Under these circumstances, the power dissipation of the receiving device is adjusted adaptively by having the nearest and the second-nearest signals extracted so that the first IF amplifier 60, second mixer 70 and second IF amplifier 80 are controlled according to the detected signal levels.

In the case above, the variable gain amplifier 30 and first mixer 40 have further signals assigned on channels other than the nearest and second-nearest channels. More about such signals will be described later.

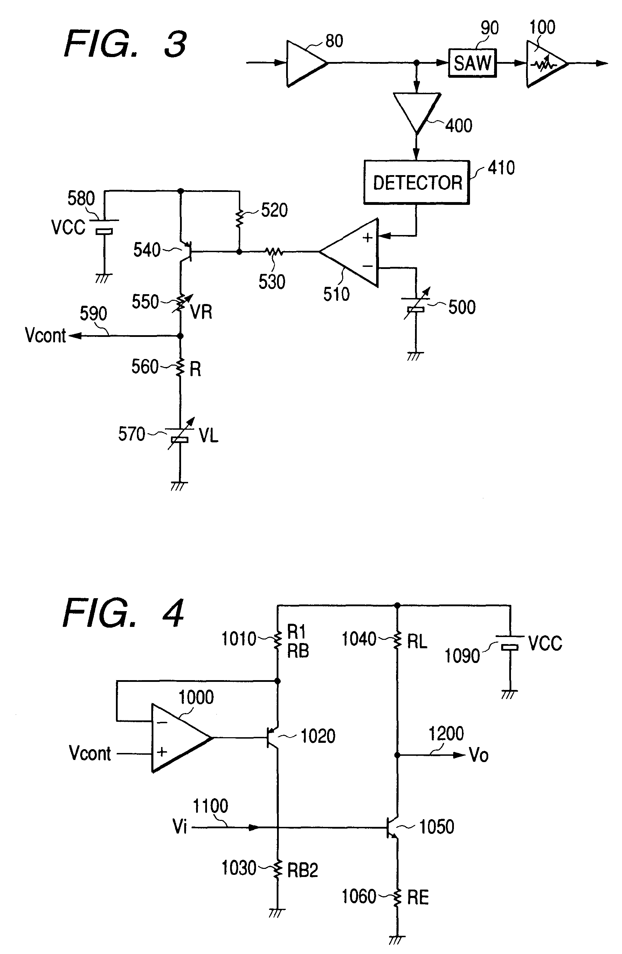

One preferred embodiment of the invention for switching the bias current as outlined above will now be described in detail with reference to Fig. 3.

In Fig. 3, those parts whose functionally equivalent counterparts were already shown in Fig. 2 are given the same reference numerals, and descriptions of such parts are omitted where they are repetitive. As shown in Fig. 3, the detector 410 is connected to a circuit comprising a comparator 510, resistors 520 and 530, a PNP transistor 540, a variable resistor 550, a resistor 560, and a reference power supply 570 (all not shown in Fig. 2) connected in series. In the detector 410, the level of the signal input to the SAW filter 90 is detected and the power consumed by bias circuits of the first IF amplifier 60, second mixer 70 and second IF amplifier 80 is controlled in keeping with the detected signal level, as described below.

An output of the detector circuit 410 is input to a non-inverting input terminal of the comparator 510. An inverting input terminal of the comparator 510 is connected to a reference power supply 500. An output terminal of the comparator 510 is connected via the resistor 530 to a base electrode of the PNP transistor 540. An emitter electrode of the PNP transistor 540 is connected to a power supply 580 and to one end of the resistor 520. The other end of the resistor 520 is connected to a base terminal of the PNP transistor 540. A control output signal 590 is derived from between the variable resistor 550 and the resistor 560.

The voltage of the reference power supply 500 is set so as to make the output of the comparator 510 zero if the output level of the detector 410 is such that no interference signal appears on the nearest and second-nearest channels of the signal upstream of the second IF filter 90, or if the detector output level is such that no distortion appears in circuit blocks downstream of the second IF filter 90. In such cases, the PNP transistor 540 is turned on.

If the supply voltage 580 is represented by Vcc, the reference voltage 570 by VL, the variable resistor 550 by VR and the resistor 560 by R, then a voltage Vcont on the output signal line 590 is defined as

$$Vcont = (Vcc - VL)R/(R + VR) + VL \qquad (1)$$

As interference caused by the signals on the nearest and the second-nearest channels grows, the PNP transistor 540 is getting increasingly turned off. When the interference exceeds a certain threshold, then the relation

$$Vcont = VL \qquad (2)$$

results. The voltage Vcont varies between values defined by the expressions (1) and (2) above in accordance with the magnitude of the interference due to the signals on the nearest and the second-nearest channels.

The voltage Vcont thus changes depending on the magnitude of interference. A maximum value of the voltage Vcont is defined by the expression (1) and its minimum value by the expression (2), and the voltage does not take any smaller or larger values than the minimum or the maximum value. Given such characteristics, the circuits shown in Fig. 3 and not included in Fig. 2 act as a limiter that outputs a signal having an upper and a lower limit based on the output of the detector 410. As evident from the expressions above, the voltage Vcont is lower the greater the interference becomes.

The Vcont signal thus generated is input to the bias circuits of the first IF amplifier 60, second mixer 70 and second IF amplifier 80. The signal is controlled in keeping with the interference signals on the nearest and the second-nearest channels so that the power dissipation of the receiving device is suitably adjusted. Specifically, where the voltage Vcont defined by the expression (2) is used as the reference voltage, the bias circuits of the first IF amplifier 60, second mixer 70, and second IF amplifier 80 may be designed to address large interference signals on the nearest and the second-nearest channels. This is a conventionally designed arrangement in which circuit blocks are subject to large bias currents.

On the other hand, where the voltage Vcont defined by the expression (1) is used as the reference voltage, the bias circuits of the first IF amplifier 60, second mixer 70, and second IF amplifier 80 may be designed to deal with signal levels such that interference signals on the nearest and the second-nearest channels are virtually absent or distortion is virtually nonexistent in circuit blocks downstream of the second IF filter 90. This design allows the bias current to be set low. Generally, a bias current that minimizes distortion differs from a bias current conducive to minimizing noise figure. Thus the bias current utilizing the Vcont of the expression (1) as the reference voltage is established so as to minimize noise figure.

In the embodiment above, the comparator 510 was shown to effect zero output in conjunction with the voltage of the reference power supply 500. Alternatively, users may determine the necessary settings as desired in consideration of an optimum trade-off between power dissipation and interference. In such cases, users may perform input operations by referring to a displayed operation guide and by resorting to remote controls. Given the operation input, a CPU (not shown) may suitably control the reference power supply 500.

Fig. 4 is a circuit diagram of a typical bias current and an amplifier utilizing the voltage Vcont. In Fig. 4, the voltage Vcont is input to a circuit constituted by an operation amplifier 1000, a PNP transistor 1020 and a resistor 1010. If a resistance value of the resistor 1010 is represented by RB, a voltage value of a power supply 1090 by Vcc, and a collector current of the PNP transistor 1010 by IB, then the collector current IB is defined as

$$IB = (Vcc - Vcont)/RB \qquad (3)$$

The collector current IB flows through a resistor 1030, determining a base bias voltage VB of an NPN transistor 1050. If a resistance value of the resistor 1030 is represented by RB2, then the base bias voltage VB is defined by the expression:

$$VB = IB \times RB2 \qquad (4)$$

If a base voltage of the NPN transistor 1050 with reference to its emitter is denoted by VBE and a resistance value of a resistor 1060 by RE, then an emitter bias voltage VE of the NPN transistor 1050 is defined as

$$VE = (VB - VBE)/RE$$
$$= (IB \times RB2 - VBE)/RE$$
$$= \{(Vcc - Vcont)/RB \times RB2 - VBE\}/RE \qquad (5)$$

The bias current of the NPN transistor 1050 is controlled variably by adjustment of the voltage Vcont as indicated by the expression above.

A collector current of the NPN transistor 1050, represented illustratively by IC, is defined without regard to the base current by the following relation:

$$IC = VE/RE \qquad (6)$$

Meanwhile, if a signal voltage input to an input terminal 1100 is represented by Vi, a signal voltage output from an output terminal 1200 by Vo, and a resistance value of a resistor 1040 by RL, then a gain G of the circuit in Fig. 4 is defined as

$$G = Vo/Vi = -RL/RE \qquad (7)$$

That is, the gain G occurs independently of the bias current IB. It follows that the voltage Vcont may be set in accordance with the characteristics shown in Fig. 7 and that the bias current IB may be reduced to save power if there are no signals on the nearest or second-nearest channels. As illustrated in Fig. 7, lessening of the bias current IB permits reductions in NF leading to enhanced performance.

In like manner, the variable gain amplifier 30 and first mixer 40 in Fig. 2 are controlled in terms of power dissipation in keeping with interference signals. This also contributes to reducing the consumption of power by the receiving device as a whole. Since the variable gain amplifier 30 and first mixer 40 have more signals assigned on channels other than the nearest and the second-nearest channels, the input signal to the amplifier 400 is derived not from between the second IF amplifier 80 and the second IF filter 90 but from between the first mixer 40 and the first IF filter 50. The arrangement allows interference signals, however large, on channels other than the nearest and the second-nearest channels to reach the amplifier 400 before they could be removed by the first IF filter 50. This makes it possible to control appropriately the bias current through the variable gain amplifier 30 and first mixer 40.

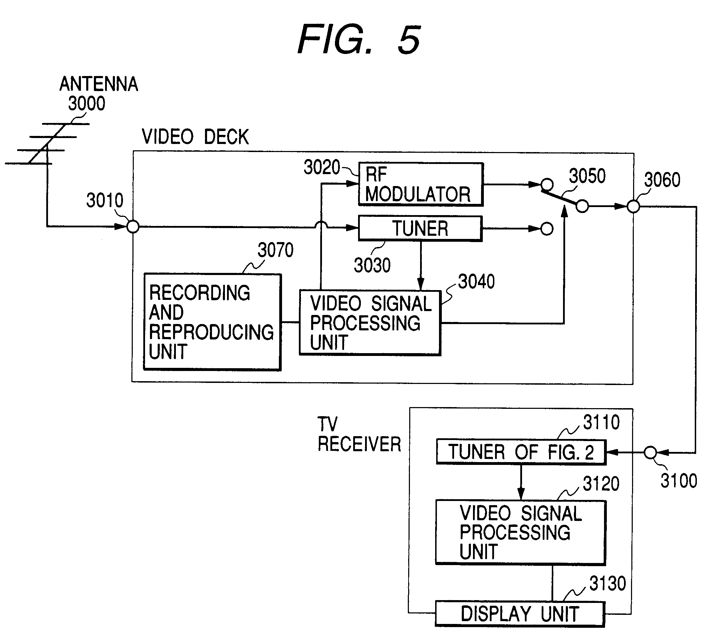

Fig. 5 is a block diagram of a setup connecting a television receiver with a video deck each incorporating the receiving device shown Fig. 2. Each receiving device is called the tuner hereunder.

Processing at recording time takes place as follows: An IF signal input through an antenna 3000 is fed to an RF signal input terminal 3010 of the video deck. From the terminal 3010, the signal reaches a video deck tuner 3030 which extracts selectively a signal on a desired channel from the received signal. The selected signal is input to a video signal processing unit 3040 while the signal input through the RF input terminal 3010 is concurrently forwarded unmodified to an RF signal output terminal 3060. Signal switching is done by means ofaswitch 3050. The video signal processing unit 3040 performs signal processing such as to record the signal of the desired channel. A recording and reproducing unit 3070 records the signal of the desired channel.

At a time of reproduction, the signal reproduced by the recording and reproducing unit 3070 and processed by the video signal processing unit 3040 is input to an RF modulator 3020 for conversion into an RF signal. After the conversion, the RF signal is output via the switch 3050 to an RF signal output terminal 3060.

At recording time, a frequency-division multiplexed multiple-wave RF signal is input to an RF signal input terminal 3100 of the television receiver. At a time of reproduction, a single-wave RF signal from the RF modulator 3020 is input to the RF signal input terminal 3100. A signal output by a tuner 3110 of the television receiver is processed by a video signal processing unit 3120 for display on a display unit 3130.

Where the tuner 3110 incorporated in the television receiver is structured as depicted in Fig. 2, the consumption of power by the tuner 3110 is reduced during reproduction by the video deck. This contributes to reducing power dissipation of the television receiver as a whole.

If the tuner 3030 incorporated in the video deck is structured as shown in Fig. 2 and if the signal input through the RF signal input terminal 3010 is a single-wave RF signal (i.e., with no adjacent signals involved), then the consumption of power by the tuner 3010 is reduced in the manner described above during recording by the video deck. This contributes to lowering power dissipation of the video deck as a whole.

Although the invention has been described using television signal receiving devices as typical examples, this is not limitative of the invention. The invention is applied advantageously to other types of receiving devices wherein interference signals can occur.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications as fall within the ambit of the appended claims.

**Claims**

1. A receiving device comprising:

an input terminal through which to input a signal to be received;

a first variable gain amplifier which either amplifies or attenuates to a predetermined level the signal input through the input terminal;

a filter which lets pass a signal of a predetermined band selected from the signal output by the first variable gain amplifier;

a second variable gain amplifier which either amplifies or attenuates to a predetermined level the signal having passed through the filter; and

a gain switching element which switches gain control between the first variable gain amplifier and the second variable gain amplifier;

wherein, if a level of the signal input to the filter is in excess of a predetermined level, the gain switching element changes a bias current of circuit blocks upstream of the filter in accordance with the signal input to the filter.

2.  A receiving device according to claim 1, further comprising a detector including:

a amplifier which amplifies the signal input to the filter;

a wave detector which detects an output of the amplifier;

a comparator which compares an output of the wave detector with a voltage from a reference power supply;

a limiter which determines a maximum and a minimum value of an output from the comparator; and

circuit blocks which are located upstream of the filter and which determine a magnitude of the bias current.

3.  A receiving device according to claim 1, wherein the predetermined level is variably controlled.

4.  A receiving device comprising:

a receiver which receives a reception signal having a plurality of channels;

an amplifier which amplifies for output the reception signal received by the receiver;

a filter which admits the reception signal from the amplifier to let pass selectively a signal of a desired channel for output; and

a detector which detects a level of the reception signal input to the filter and controls a bias current of the amplifier in accordance with the detected level.

5.  A receiving device comprising:

a receiver which receives a reception signal having a plurality of channels;

a circuit element which at least includes an amplifier for amplifying the reception signal received by the receiver, and a mixer for converting a frequency of the reception signal received by the receiver;

a filter which admits the reception signal from the circuit element to let pass selectively a signal of a desired channel for output; and

a detector which detects a level of the reception signal input to the filter and controls a bias current of the amplifier in accordance with the detected level.

6.  A receiving device according to claim 4, wherein the detector controls the bias current in a manner controlling power dissipation of the receiving device as a whole.

7.  A receiving device according to claim 4, wherein the level of the reception signal detected by the detector varies depending on whether any signal having a channel adjacent to the desired channel exists.

8.  A receiving device according to claim 4, wherein the level of the reception signal detected by the detector varies depending on a magnitude of an interference signal caused by a signal having a channel adjacent to the desired channel.

9.  A receiving device according to claim 4, wherein the filter is a SAW filter.

10.  A receiving device according to claim 5, wherein the detector controls the bias current in a manner controlling power dissipation of the receiving device as a whole.

11.  A receiving device according to claim 5, wherein the level of the reception signal detected by the detector varies depending on whether any signal having a channel adjacent to the desired channel exists.

**12.** A receiving device according to claim 5, wherein the level of the reception signal detected by the detector varies depending on a magnitude of an interference signal caused by a signal having a channel adjacent to the desired channel.

**13.** A receiving device according to claim 5, wherein the filter is a SAW filter.

**14.** A television receiver comprising:

a receiver which receives a reception signal having a plurality of channels;
an amplifier which amplifies for output the reception signal received by the receiver;
a filter which admits the reception signal from the amplifier to let pass selectively a signal of a desired channel for output;
a detector which detects a level of the reception signal input to the filter and controls a bias current of the amplifier in accordance with the detected level; and
a display output element which either displays or outputs any of images, voice and data based on the signal of the desired channel from the filter.

**15.** A television receiver comprising:

a receiver which receives a reception signal having a plurality of channels;
a circuit element which at least includes an amplifier for amplifying the reception signal received by the receiver, and a mixer for converting a frequency of the reception signal received by the receiver;
a filter which admits the reception signal from the circuit element to let pass selectively a signal of a desired channel for output;
a detector which detects a level of the reception signal input to the filter and controls a bias current of the amplifier in accordance with the detected level; and
a display output element which either displays or outputs any of images, voice and data based on the signal of the desired channel from the filter.

**16.** A recording and reproducing apparatus comprising:

a receiver which receives a reception signal having a plurality of channels;
an amplifier which amplifies for output the reception signal received by the receiver;
a filter which admits the reception signal from the amplifier to let pass selectively a signal of a desired channel for output;
a detector which detects a level of the reception signal input to the filter and controls a bias current of the amplifier in accordance with the detected level; and
a recording and reproducing element which records and reproduces any of images, voice and data based on the signal of the desired channel from the filter.

**17.** A recording and reproducing apparatus comprising:

a receiver which receives a reception signal having a plurality of channels;
a circuit element which at least includes an amplifier for amplifying the reception signal received by the receiver, and a mixer for converting a frequency of the reception signal received by the receiver;
a filter which admits the reception signal from the circuit element to let pass selectively a signal of a desired channel for output;
a detector which detects a level of the reception signal input to the filter and controls a bias current of the amplifier in accordance with the detected level; and
a recording and reproducing element which records and reproduces any of images, voice and data based on the signal of the desired channel from the filter.

FIG. 1

FIG. 2

## FIG. 3

## FIG. 4

12

# FIG. 5

ANTENNA
3000

VIDEO DECK

3020 — RF MODULATOR

3050

3060

3010

TUNER

3030

3070

RECORDING AND REPRODUCING UNIT

VIDEO SIGNAL PROCESSING UNIT

3040

TV RECEIVER

3110
TUNER OF FIG. 2

3120
VIDEO SIGNAL PROCESSING UNIT

3100

3130
DISPLAY UNIT

## FIG. 6

ATTENUATION CHARACTERISTIC
OF FIRST IF FILTER

5000

5030

5010 5020

5040 5050

SECOND-
NEAREST
SIGNAL

NEAREST
SIGNAL

DESIRED
SIGNAL

NEAREST
SIGNAL

SECOND-
NEAREST
SIGNAL

FREQUENCY

## FIG. 7

IM3 [dBc]
IM2 [dBc]
NF [dB]

4000

IM3

4010

IM2

4020

NF

COLLECTOR CURRENT [A]